**Europäisches Patentamt**

**European Patent Office**

**Office européen des brevets**

(11) Numéro de publication : **0 356 324 B1**

(12) **FASCICULE DE BREVET EUROPEEN**

(45) Date de publication du fascicule du brevet : **27.01.93 Bulletin 93/04**

(51) Int. Cl.⁵ : **C09D 167/06,** C08J 7/04

(21) Numéro de dépôt : **89402305.0**

(22) Date de dépôt : **18.08.89**

(54) **Procédé de protection contre l'eau d'une paroi en résine stratifiée et paroi en résine stratifiée protégrée ainsi obtenue.**

(30) Priorité : **24.08.88 FR 8811180**

(43) Date de publication de la demande : **28.02.90 Bulletin 90/09**

(45) Mention de la délivrance du brevet : **27.01.93 Bulletin 93/04**

(84) Etats contractants désignés :
**AT BE CH DE ES FR GB GR IT LI LU NL SE**

(56) Documents cités :
**US-A- 4 724 173**

(73) Titulaire : **CHANTIERS BENETEAU S.A.**
**Z.I. des Mares**
**F-85270 Saint Hilaire de Riez (FR)**

(72) Inventeur : **Guilbaud, Vincent**
**L'Auvière**
**F-44320 Chauve (FR)**

(74) Mandataire : **Dawidowicz, Armand Cabinet Dawidowicz**
**18, Boulevard Pereire**
**F-75017 Paris (FR)**

## Description

La présente invention concerne les parois en résine stratifiée rentrant dans une structure qui se trouve pendant une longue durée au contact de l'eau, telles que les coques de bateau, les parois de piscine, les bassins et récipients, etc.

Les parois en résine stratifiée sont réalisées en appliquant sur la paroi d'un moule à la forme à obtenir des fibres mécaniquement résistantes enrobées par une résine. Il en résulterait une paroi au contact de la forme présentant des irrégularités de surface et la paroi mécaniquement résistante obtenue comporterait des pores, ce qui favoriserait la pénétration, dans l'épaisseur de la paroi, de l'eau qui dégrade les résines constitutives.

Pour avoir un bon aspect de surface des moulages en stratifié, il est connu d'enduire au préalable la surface du moule avec une résine filmogène, appelée techniquement "gel coat". Les résines filmogènes utilisées sont des polyesters, des résines époxy, etc., qui donnent des membranes semi-perméables. Il en résulte que lorsqu'elles sont appliquées sur des parois en résine stratifiée séjournant au contact de l'eau, telles que les parois de piscine et coques de bateaux, les couches superficielles de "gel coat" laissent assez rapidement l'eau pénétrer dans la résine stratifiée, ce qui provoque des décollements partiels de la couche de résine du "gel coat" et la formation de bulles ou cloques. Ce phénomène connu sous le nom de "blistering" laisse passer l'eau vers le stratifié qui est sujet à l'hydrolyse de sorte que, en plus de l'aspect inesthétique des cloques, les caractéristiques mécaniques du stratifié se trouvent diminuées.

On a proposé, pour pallier cet inconvénient (US-A-4.724.173), de recouvrir la couche perméable de gel coat et de recouvrir celle-ci par une couche semi-perméable. Mais cette solution ne donne pas totale satisfaction en permettant à l'eau de pénétrer dans la couche stratifiée après un certain temps.

Pour tenter également de pallier cet inconvénient, on a proposé d'intercaler entre le stratifié et la couche de résine superficielle ou "gel coat", une couche de résine formant barrière contre l'eau appelée "skin coat". Une telle utilisation de deux couches superposées à un stratifié, limite le choix de la résine de la couche barrière qui doit être compatible pour éviter en particulier un risque de décohésion entre les couches successives, particulièrement sous l'effet de chocs, comme c'est le cas avec une couche intermédiaire en résine époxyde.

On a donc proposé de réaliser une telle couche barrière en une résine à base de vinylester. L'utilisation de résines à base de vinylester, qui est connue depuis longtemps dans l'industrie des polyesters pour augmenter la résistance à la corrosion, assure une certaine augmentation de la résistance à la pénétration de l'eau, tout en maintenant ou même en augmentant la résistance mécanique du stratifié ainsi revêtu.

Toutefois il s'est avéré qu'une couche barrière en une résine à base de vinylester présente une certaine sensibilité à l'eau et ne retarde pas d'une façon satisfaisante l'hydrolyse de la résine du stratifié.

En raison des caractéristiques anticorrosives élevées connues des résines vinylesters, l'inventeur a été conduit à penser que le rôle de barrière contre la pénétration de l'eau n'était pas lié aux propriétés anticorrosives de la résine constituant la couche mais résultait d'un effet purement mécanique.

Sur cette base, l'inventeur a étudié le comportement comme couche-barrière entre le "gel coat" et le stratifié des résines ayant un encombrement stérique élevé et a constaté qu'un encombrement stérique élevé réduirait fortement la perméabilité de la couche.

L'invention a en conséquence pour objet un procédé de protection contre l'eau, en particulier l'eau de mer, d'un substrat en résine stratifiée recouvert sur sa face au contact de l'eau par une couche de résine filmogène dite "gel coat" consistant à intercaler entre le substrat en résine stratifiée et la couche de "gel coat" une couche-barrière, caractérisé par le fait que la couche-barrière est constituée par une résine présentant dans sa chaîne des noyaux cycliques et des doubles liaisons réactives lui conférant un fort encombrement stérique, la couche de skin coat étant moins perméable à l'eau que la couche de gel coat et se polymérisant parfaitement en couche mince.

Le but de cet agencement est d'inverser le sens de la semi-perméabilité de la couche de gel coat.

Il en résulte si l'on considère l'ensemble gel coat/skin coat/stratifié renforcé verre, une répartition de l'imperméabilité en fonction des couches en forme de dôme. Avec un gel coat seul, celle-ci présente une décroissance du gel coat vers l'intérieur du stratifié.

Les résines types utilisables dans le cadre de l'invention sont les polyesters bisphénoliques insaturés, les polyesters bisphénoliques hydrogène et insaturés (dont le noyau bisphénol est saturé) et les polyesters isophtaliques insaturés.

Les résines bisphénoliques sont connues pour leurs propriétés de protection vis-à-vis des agressions chimiques mais n'ont jamais été envisagées pour constituer une barrière contre l'eau entre une résine stratifiée et une couche de "gel coat", un tel effet barrière étant essentiellement physico-chimique.

On peut citer comme résine à base de bisphénol utilisable de préférence pour réaliser la barrière conformément à l'invention, une résine polyester bisphénolique vendue sous la marque déposée "STRATYL 1110", et ayant la formulation molaire suivante :

| Bisphénol A : | 0,2 mole |
|---|---|
| Propylèneglycol : | 0,8 mole |
| Anhydride maléique : | 0,6 mole |
| Anhydride phtalique : | 0,4 mole |

en dilution dans un comonomère réactif tel que le styrène.

Afin d'assurer une excellente cohésion entre les couches, l'invention prévoit que la couche de "gel coat" est appliquée sur la paroi d'un moule et la couche de résine à base de bisphénol est appliquée sur la couche de "gel coat", soit immédiatement, c'est-à-dire humide sur humide (entre 0 et 20'), soit après gélification de la résine, mais avant polymérisation complète, c'est-à-dire entre 1h30'et 4 heures après l'application de la couche de résine formant le "gel coat". En appliquant la couche-barrière sur la couche de gel non encore polymérisée, on assure une liaison stable entre les deux couches.

De même, afin d'assurer une bonne cohésion entre la couche-barrière et le stratifié, l'invention prévoit que la stratification est effectuée dans un temps très court après le dépôt de la couche-barrière avant polymérisation complète de la couche-barrière.

Avantageusement, la couche-barrière et la couche de "gel coat" ont chacune une épaisseur comprise entre 0,30 et 0,45 mm. On assure ainsi une bonne conservation des propriétés mécaniques de l'ensemble avec un poids et un coût limités.

Il est connu que, pour augmenter la résistance au blistering d'un stratifié renforcé verre, protégé par un gel-coat, il suffit d'augmenter l'épaisseur du gel coat appliqué.

Une telle solution a pour limite l'épaisseur maximum de gel coat applicable :
- du fait des propriétés mécaniques de ce dernier,
- afin d'éviter les conséquences d'un dépôt trop épais de gel coat (faïençage-craquelures).
Ces limites sont de l'ordre de 0,8 mm.

Aussi, les performances d'un complexe bi-couche (gel coat/skin coat) sont à comparer à celles d'un gel coat appliqué en même épaisseur.

A épaisseur de film égale (0,7 mm) le complexe gel coat/skin coat (0,35 mm de gel coat - 0,35 mm de skin coat) comparativement à un gel coat seul (0,7 mm) retarde par un facteur supérieur ou égal à 3, le temps d'apparition de cloques.

Si l'on effectue le même genre de comparaisons entre le complexe gel coat/skin coat, et, le skin coat seul, l'effet obtenu est le même et toujours en faveur du complexe.

L'invention concerne également une structure comportant des parois en résine stratifiée, telle que coque de bateau, bassin de piscine, etc., parois obtenues par le procédé précédent.

La mise en oeuvre de l'invention sera décrite plus en détail ci-après.

On a réalisé avec une couche-barrière conforme à l'invention la coque d'un bateau de 13 mètres dont la surface extérieure totale de 53 m$^2$ se compose de 36 m$^2$ d'oeuvres vives mouillées par l'eau et de 17 m$^2$ d'oeuvres mortes.

On a appliqué au pistolet sur la paroi intérieure du moule une résine à base de maléoïsophtalate de propylène-diéthylène-néopentyle glycol avec du styrène comme monomère réactif. Cette résine destinée à former le "gel coat" a été appliquée sous une épaisseur de 0,9 mm sur la surface correspondant aux oeuvres mortes soit 19 kg et de 0,41 mm sur celle correspondant aux oeuvres vives soit 18,5 kg. La gélification de ce "gel coat" a été assurée par 2% de peroxyde de méthyléthylcétone en solution à 50% dans un phtalate.

3 heures après application de cette couche de "gel coat" qui se trouve alors à l'état polymérisé sec, on a appliqué au pistolet sur la surface correspondant aux oeuvres vives sous une épaisseur de 0,46 mm, 18 kg d'un maléophtalate de bisphénol A hydrogène et propylène avec du styrène comme monomère réactif. Cette résine est commercialisée sous la marque "STRATYL 1110".

La gélification de cette couche a été assurée avec 2% de peroxyde de méthyléthylcétone en solution à 50% dans du phtalate. On a ainsi réalisé sur les oeuvres vives une couche-barrière dite "skin coat".

Après polymérisation pendant 4 heures de cette couche de skin coat, on a formé sur sa face interne et sur la face interne du gel coat de la surface correspondant aux oeuvres mortes, la paroi en résine stratifiée à base de polyester renforcée aux fibres de verre. La coque ainsi réalisée s'est avérée être pratiquement imperméable et ne présentait pas de cloques après plusieurs mois de séjour à l'eau.

Essai de comparaison entre deux "skin coat" l'un à base de vinylester et l'autre conforme à la présente invention.

Afin d'évaluer les performances d'une couche de "gel coat" à base de maléoïsophtalate de propylène-diéthylène-néopentyle glycol associée à une couche de skin coat à base de résine vinylester ou de polyester bisphénolique, on a effectué les essais suivants.

3

1. Sensibilité à l'eau des résines constituant le skin coat.

Cet essai est réalisé sur des plaquettes ayant un diamètre de 8 cm, un poids d'environ 25 g et une épaisseur de 5 mm. Deux plaquettes ont été réalisées l'une avec la résine polyester bisphénolique vendue sous la marque "STRATYL 1110", l'autre avec une résine vinylester vendue sous la marque "ATLAC 580".

Les deux plaquettes ont été immergées dans de l'eau jusqu'à stabilisation du poids sous l'effet de la reprise d'eau.

Les plaquettes ont été ensuite séchées et pesées afin de mesurer les pertes par solubilisation des composés endogènes sous l'effet de l'hydrolyse du produit et des composés exogènes.

Les résultats sont donnés dans le Tableau N° 1.

### TABLEAU N° 1

|  | prise en eau | perte en soluble |
|---|---|---|
| Plaquette en résine vinylester "ATLAC 580" | 0,7 | 0,35 |
| Plaquette en résine bisphénolique "STRATYL 1110" | 0,26 | 0,14 |

2. Vieillissement accéléré au contact de l'eau

Cette deuxième série d'essais avait pour but de comparer le vieillissement d'une résine stratifiée protégée par un gel coat isophtalique et par un gel coat isophtalique associé à un skin coat à base de la résine vinylester "ATLAC" et à un skin coat à base de la résine bisphénolique "STRATYL". Le vieillissement a été apprécié par l'apparition de bulles sur la surface après immersion dans de l'eau à 60°C.

Les résultats sont donnés dans le Tableau N° 2.

### TABLEAU N° 2

| Skin coat | Résultats |
|---|---|
| Pas de skin coat | Apparition de bulles après 230 heures |
| Skin coat à base d'ATLAC | Apparition de bulles après 910 heures |
| Skin coat à base de STRATYL | Pas de bulles après 1600 heures; essai arrêté |

Le skin coat conforme à l'invention à base de résine bisphénolique améliore donc notablement la protection

4

contre la pénétration de l'eau et l'hydrolyse.

## Revendications

1. Procédé de protection contre l'eau, en particulier l'eau de mer, d'un substrat en résine stratifiée recouvert sur sa face au contact de l'eau par une couche de résine filmogène dite "gel coat" dans lequel on intercale entre le substrat en résine stratifiée et la couche de "gel coat", une couche-barrière, constituée par une résine présentant dans sa chaîne des noyaux cycliques et des doubles liaisons réactives lui conférant un fort encombrement stérique, la couche de skin coat étant moins perméable à l'eau que la couche de gel coat et se polymérisant parfaitement en couche mince.

2. Procédé selon la revendication 1,
caractérisé en ce que ladite couche-barrière est constituée par une résine du groupe comprenant les polyesters bisphénoliques insaturés, les polyesters bisphénoliques hydrogène et insaturés (dont le noyau bisphénol est saturé) et les polyesters isophtaliques insaturés.

3. Procédé selon la revendication 2, dans lequel la résine polyester bisphénolique insaturée présente la formulation molaire suivante :
   Bisphénol A :              0,2 mole
   Propylèneglycol :          0,8 mole
   Anhydride maléïque :       0,6 mole
   Anhydride phtalique :      0,4 mole

4. Procédé selon l'une des revendications 1 à 3,
caractérisé en ce que la couche de résine formant le "gel coat" de surface est appliquée sur la paroi d'un moule et la couche de résine formant la barrière est appliquée sur la couche de surface avant polymérisation complète de la résine constituant le gel coat.

5. Procédé selon la revendication 4, dans lequel la couche de résine formant la barrière est appliquée sur la couche de résine formant le "gel coat" dans un délai de 0 à 20 minutes après le dépôt de ladite couche de résine formant le "gel coat".

6. Procédé selon la revendication 4, dans lequel l'intervalle de temps entre l'application de la couche de résine formant le "gel coat" et l'application sur celle-ci de la résine formant la couche-barrière est compris entre 1 h 30' et 4 h 00.

7. Procédé selon l'une des revendications 4 à 6, dans lequel la couche de résine stratifiée est réalisée dans un temps très court après le dépôt de la couche-barrière.

8. Procédé selon l'une des revendications 1 à 7, dans lequel la couche de résine formant le "gel coat" de surface et la couche de résine formant la barrière ont chacune une épaisseur comprise entre 0,30 et 0,45 mm.

9. Structure comportant des parois en résine stratifiée telle que coque de bateau, bassin de piscine, etc. au contact de l'eau comportant, sur la surface de la paroi en résine stratifiée au contact de l'eau, entre ladite surface et la couche de "gel coat", une couche-barrière constituée par une résine polymérisée présentant dans sa chaîne avant polymérisation des noyaux cycliques et des doubles liaisons réactives lui conférant un fort encombrement stérique, la couche de skin coat étant moins perméable à l'eau que la couche de gel coat et se polymérisant parfaitement en couche mince.

10. Structure selon la revendication 9, dans laquelle la couche-barrière est constituée par une résine du groupe constitué par les polyesters bisphénoliques insaturés, les polyesters bisphénoliques hydrogène et insaturés (dont le noyau bisphénol est saturé) et les polyesters isophtaliques insaturés.

11. Structure selon la revendication 10, dans laquelle la résine polyester bisphénolique insaturée présente la formulation molaire suivante :
    Bisphénol A :              0,2 mole
    Propylèneglycol :          0,8 mole

| Anhydride maléïque : | 0,6 mole |
|---|---|
| Anhydride phtalique : | 0,4 mole |

**12.** Structure selon l'une des revendications 9 à 11, dans laquelle ladite couche-barrière et ladite couche de "gel coat" ont chacune une épaisseur de 0,30 à 0,45 mm.

**Patentansprüche**

**1.** Verfahren zum Schützen eines Untergrunds aus Harzlaminat, der auf der wasserberührten Fläche von einem als "Gel coat" bezeichneten Harzfilm bedeckt ist, gegen Wasser und insbesondere gegen Meerwasser, wobei zwischen dem Untergrund aus Harzlaminat und der "Gel coat"-Schicht eine Sperrschicht eingefügt wird, bestehend aus einem Harz, welches in seiner Kette zyklische Kerne und doppelte reaktive Bindungen aufweist, wodurch eine hohe sterische Hinderung erzeugt wird, während die "Skin coat"-Schicht weniger wasserdurchlässig ist als die "Gel coat"-Schicht und eine einwandfreie Polymerisation in dünner Schicht erfolgt.

**2.** Verfahren nach Anspruch 1, **dadurch gekennzeichnet,** daß die genannte Sperrschicht aus einem Harz der Gruppe besteht, enthaltend ungesättigte Bisphenolpolyester, Wasserstoffbisphenolpolyester und ungesättigte Bisphenolpolyester (deren Bisphenolkern gesättigt ist) sowie ungesättigte Isophthalpolyester.

**3.** Verfahren nach Anspruch 2, wobei das ungesättigte Bisphenolpolyester-Harz folgende Molformel aufweist:

| Bisphenol A: | 0,2 Mol |
|---|---|
| Propylenglycol: | 0,8 Mol |
| Maleinsäureanhydrid: | 0,6 Mol |
| Phthalsäureanhydrid: | 0,4 Mol |

**4.** Verfahren nach einem der Ansprüche 1 bis 3, **dadurch gekennzeichnet,** daß die den "Gel coat" an der Oberfläche bildende Harzschicht auf die Wand einer Form aufgetragen und die die Sperrschicht bildende Harzlage vor vollständiger Polymerisation des den "Gel coat" bildenden Harzes auf die Oberflächenschicht aufgetragen wird.

**5.** Verfahren nach Anspruch 4, wobei die die Sperrschicht bildende Harzlage auf die den "Gel coat" bildende Harzschicht innerhalb von 0 bis 20 Minuten nach Aufbringung der gennanten, den "Gel coat" bildenden Harzschicht aufgetragen wird.

**6.** Verfahren nach Anspruch 4, wobei der Zeitraum zwischen der Auftragung der den "Gel coat" bildenden Harzschicht und der Auftragung des die Sperrschicht bildenden Harzes darauf zwischen 1 Stunde 30 Minuten und 4 Stunden beträgt.

**7.** Verfahren nach einem der Ansprüche 4 bis 6, wobei die Harzlaminatschicht innerhalb einer sehr kurzen Zeit nach Aufbringung der Sperrschicht hergestellt wird.

**8.** Verfahren nach einem der Ansprüche 1 bis 7, wobei die den "Gel coat" an der Oberfläche bildende Harzschicht und die die Sperrschicht bildende Harzlage jeweils eine Dicke zwischen 0,30 und 0,45 mm haben.

**9.** Konstruktion mit Wänden aus Harzlaminat, wie zum Beispiel ein Schiffsrumpf, ein Schwimmbecken usw., die mit Wasser in Berührung kommt und auf der Oberfläche der wasserberührten Harzlaminatwand zwischen der genannten Oberfläche und der "Gel coat"-Schicht eine Sperrschicht aufweist, bestehend aus einem polymerisierten Harz, welches in seiner Kette vor der Polymerisation zyklische Kerne und doppelte reaktive Bindungen aufweist, die eine starke sterische Hinderung bewirken, wobei die "Skin coat"-Schicht weniger vasserdurchlässig ist als die "Gel coat"-Schicht und die Polymerisation vollständig in dünner Schicht erfolgt.

**10.** Konstruktion nach Anspruch 9, wobei die Sperrschicht aus einem Harz der Gruppe besteht, enthaltend ungesättigte Bisphenolpolyester, Wasserstoffbisphenolpolyester und ungesättigte Bisphenolpolyester (deren Bisphenolkern gesättigt ist) sowie ungesättigte Isophthalpolyester.

11. Konstruktion nach Anspruch 10, wobei das gesättigte Bisphenolpolyester-Harz folgende Molformel aufweist:

| | |
|---|---|
| Bisphenol A: | 0,2 Mol |
| Propylenglycol: | 0,8 Mol |
| Maleinsäureanhydrid: | 0,6 Mol |
| Phthalsäureanhydrid: | 0,4 Mol |

12. Konstruktion nach einem der Ansprüche 9 bis 11, wobei die genannte Sperrschicht und die gennante "Gel coat"-Schicht jeweils eine Dicke von 0,30 bis 0,45 mm haben.

## Claims

1. Method of protecting against water, particularly sea water, a laminated resin substrate covered, on its face in contact with the water, with a film-forming resin coat known as a "gel coat", wherein a barrier coat is interposed between the laminated resin substrate and the gel coat, the barrier coat consisting of a resin having in its chain cyclo-groups and reactive double bonds conferring on it a high degree of steric hindrance, the skin coat being less permeable to water than the gel coat and polymerising perfectly in a film.

2. Method according to Claim 1, characterised in that the said barrier coat consists of a resin from the group comprising unsaturated bisphenolic polyesters, unsaturated hydrogen bisphenolic polyesters (the bisphenol ring of which is saturated) and unsaturated isophthalic polyesters.

3. Method according to Claim 2, in which the unsaturated bisphenolic polyester resin has the following molar formulation:

| | |
|---|---|
| Bisphenol A: | 0.2 mole |
| Propylene glycol: | 0.8 mole |
| Maleic anhydride: | 0.6 mole |
| Phthalic anhydride: | 0.4 mole |

4. Method according to one of Claims 1 to 3, characterised in that the resin coat forming the surface gel coat is applied to the wall of a mould and the resin coat forming the barrier is applied to the surface coat before complete polymerisation of the resin constituting the gel coat.

5. Method according to Claim 4, in which the resin coat forming the barrier is applied to the resin coat forming the gel coat within a period of 0 to 20 minutes after the deposition of the said resin coat forming the gel coat.

6. Method according to Claim 4, in which the interval of time between the application of the resin coat forming the gel coat and the application on the latter of the resin forming the barrier coat is between $1\frac{1}{2}$ hours and 4 hours.

7. Method according to one of Claims 4 to 6, in which the laminated resin coat is produced within a very short time after the deposition of the barrier coat.

8. Method according to one of Claims 1 to 7, in which the resin coat forming the surface gel coat and the resin coat forming the barrier each have a thickness of between 0.30 and 0.45 mm.

9. Structure having laminated resin walls such as a boat hull, swimming pool, etc in contact with the water, having, on the surface of the laminated resin wall in contact with the water, between the said surface and the gel coat, a barrier coat consisting of a polymerised resin having in its chain, before polymerisation, cyclo-groups and reactive double bonds conferring on it a high degree of steric hindrance, the skin coat being less permeable to water than the gel coat and polymerising perfectly in a film.

10. Structure according to Claim 9, in which the barrier coat consists of a resin in the group consisting of unsaturated bisphenolic polyesters, unsaturated hydrogen bisphenolic polyesters (the bisphenol ring of which is saturated) and unsaturated isophthalic polyesters.

11. Structure according to Claim 10, in which the unsaturated bisphenolic polyester resin has the following molar formulation:
Bisphenol A: 0.2 mole
Propylene glycol: 0.8 mole
Maleic anhydride: 0.6 mole
Phthalic anhydride: 0.4 mole

12. Structure according to one of Claims 9 to 11, in which the said barrier coat and the said gel coat each have a thickness of 0.30 to 0.45 mm.